# EUROPEAN PATENT SPECIFICATION

(11) **EP 1 099 187 B1**
(45) Date of publication and mention of the grant of the patent: **19.06.2002**
(21) Application number: 99940070.8
(22) Date of filing: 28.07.1999
(51) Int. Cl.: G06K 7/00, G06K 13/08

(54) **LOCKABLE SMART-CARD CONNECTOR**
VERRIEGELBARER CHIPKARTENVERBINDER
CONNECTEUR A VERROUILLAGE, DESTINE A UNE CARTE A PUCE

(30) Priority: 29.07.1998 FR 9809710
(43) Date of publication of application: 16.05.2001
(73) Proprietor: FRAMATOME CONNECTORS INTERNATIONAL, 92400 Courbevoie (FR)
(72) Inventor: PERNET, Michel, F-25300 Doubs (FR)
(74) Representative: Beetz & Partner Patentanwälte
(86) International application number: EP9905404
(87) International publication number: WO0007136

(56) References cited:
- EP-A- 0 749 088
- DE-A- 19 645 460

## Description

The present invention relates to a lockable smart-card connector operating according to the landing-type technology.

The invention relates more particularly to a connector which includes a movable carriage intended to bring the smart-card from a first position, in which the said card partially projects to the outside of the connector, into a second position, in which the said card is immobilized inside the said connector in order to be read.

In applications using smart-cards, it is important to be certain that the card is inserted correctly and remains in the position which allows nominal operation of its microcircuit. For this purpose, the movable carriage carrying the smart-card has to be positioned correctly.

The prior art, especially German Patent Application DE-195 21 360, teaches a locking system which allows the carriage carrying the card to be immobilized in the desired position. Such a system consists of a lever which must be pushed manually once the card is inserted into the reader, the said card being pushed right into the required position.

A drawback of this system stems from the fact that it relies exclusively on the elastic properities of the material of the carriage.

One objective of the invention is to produce a connector in which the smart-card is manually positioned and thereby automatically locked in the connector, as well as unlocked and ejected, without intervention by the user.

Another objective of the invention is to prevent a second card from being inserted in error into the connector.

In order to achieve these objectives, the connector according to the invention is characterized in that it includes a lever which is mounted so as to pivot about a pin and has a first end extending near the inlet of the connector and a second end extending towards the inside of the connector and in that the said movable carriage includes at least one arm which, on the one hand, laterally pushes back the said first end of the pivoting lever in order to allow the smart-card to be inserted into the connector when the carriage is in the first position, and on the other hand, laterally pushes back the second end of the pivoting lever when the carriage is in the second position in such a way that the first end of the lever at least partially closes off the inlet of the said connector.

With such a system, it is therefore no longer necessary to manually actuate a lever in order to lock the smart-card in the read position. Furthermore, the fact that the first end of the lever at least partially closes off the inlet of the said connector prevents a second card from being inserted in error into the connector.

Other features and advantages of the invention will emerge from the description which follows, taken by way of non-limiting example, with reference to the appended figures in which:
- Figure 1 shows a top view of a connector according to the invention;
- Figure 2 shows a perspective view of the connector of Figure 1 into which a smart-card (an unlocked card) has been partially inserted and of a cover intended for covering this connector;
- Figure 3 shows a perspective view of the connector of Figure 1 in which a smart-card (a locked card) has been fully inserted and of a cover intended for covering this connector.

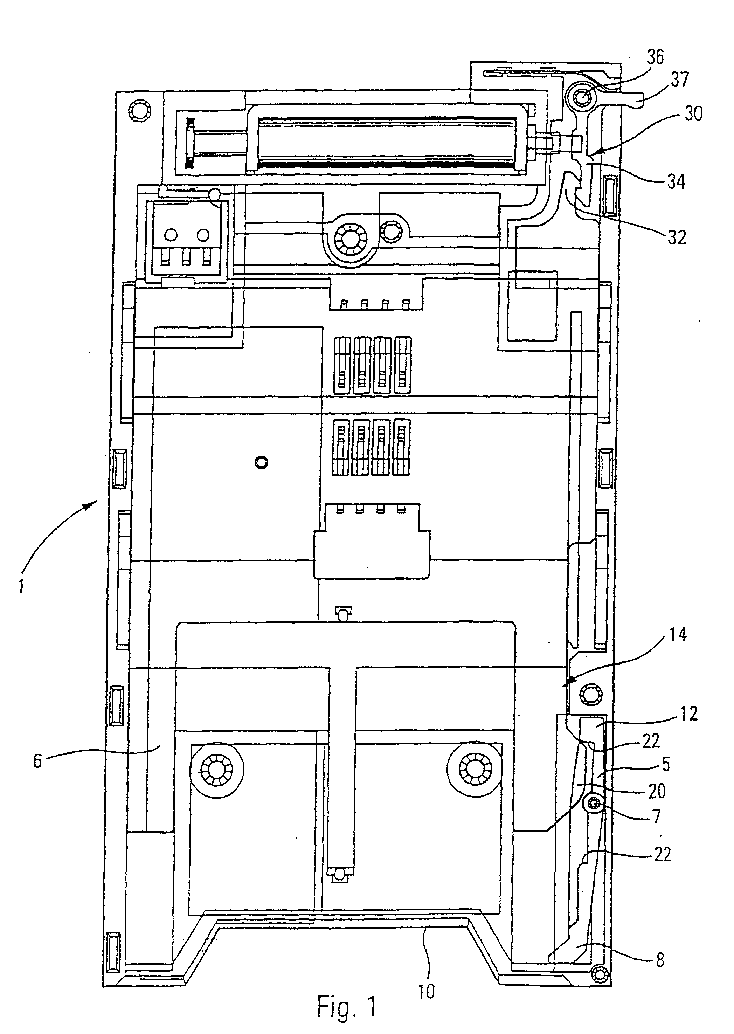

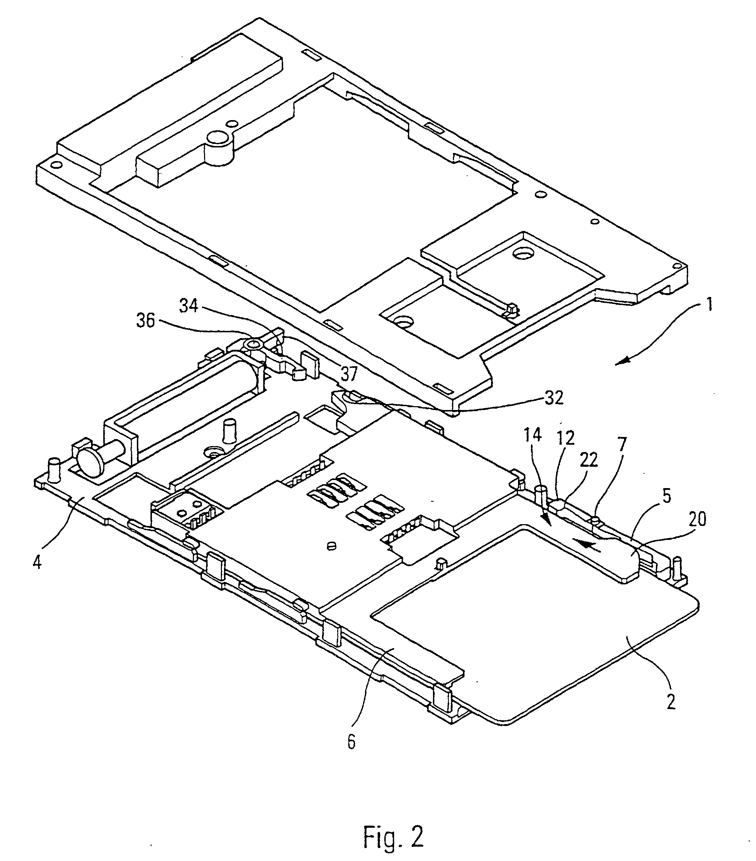

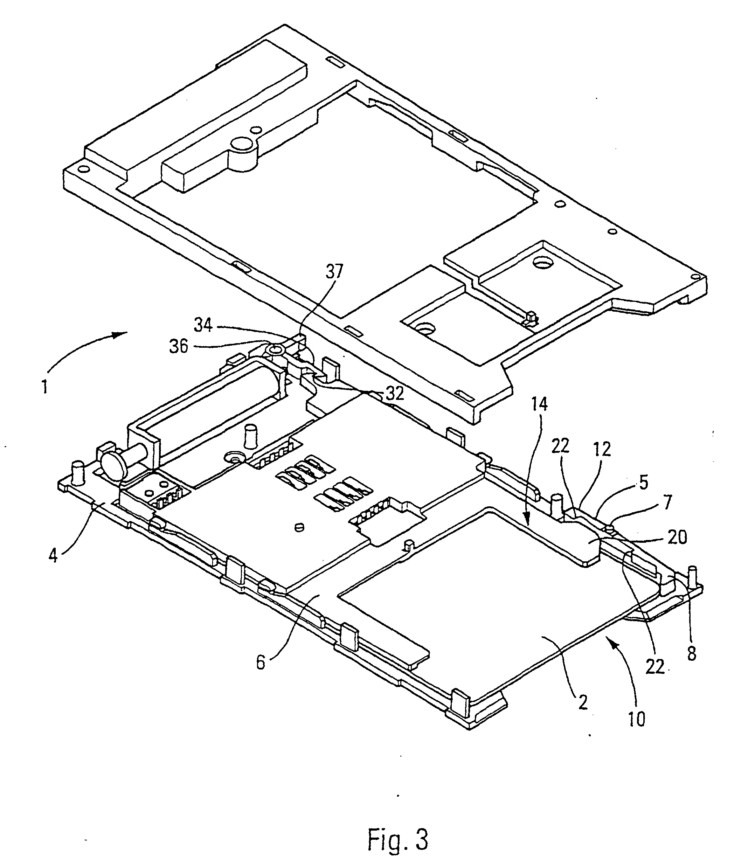

Figures 1, 2 and 3 show views of a lockable connector 1 for a smart card 2, which includes an insulating support 4 on which a carriage 6 is movably mounted, the said carriage 6 being intended to bring the smart-card 2 from a first position, for example that shown in Figure 2, in which the card 2 projects to the outside of the connector 1, into a second position, shown in Figure 3, in which the said card 2 is immobilized inside the said connector 1 in order to be read.

At the moment when the card is inserted into the connector, the movable carriage 6 lies to the rear in a first position, thus held in place by means of a return spring (not shown).

As may be seen in these Figures 1, 2 and 3, the connector 1 includes a lever 5 which is mounted so as to pivot about a pin 7 and has a first end 8 extending near the inlet 10, the said first end 8 being slightly curved in the direction of this inlet 10, and a second end 12 extending towards the inside of the connector 1. The carriage includes an arm 14, which, when the carriage 6 is in the first position shown in Figure 2, laterally pushes back the first end 8 of the pivoting lever 5 in order to allow the smart-card 2 to be inserted into the connector 1. When the card 2 comes into abutment at the front of the movable carriage 6, said card, continuing to be pushed forwards, entrains in its movement the said carriage 6. At the end of travel, this movement consequently means that the arm 14 laterally pushes back the second end 12 of the lever 5, thus making the said lever 5 pivot about the pin 7. In this way, the first end 8 at least partially closes off the inlet 10 of the said connector 1, as shown in Figure 3.

According to a preferred embodiment of the invention, the arm 14 of the carriage 6 has projection 20 which exerts a thrust on the first end 8 (or alternatively the second end 12) of the lever 5 when the carriage 6 is in the first position shown in Figure 2 (or alternatively in the second position shown in Figure 3). Preferably, each of the ends 8, 12 of the lever 5 has at least one inclined plane 22 which interacts with the projection 20 of the arm 14 of the carriage 6 in order to make the said lever 5 pivot about the pin 7. Furthermore, the connector 1 includes a locking system 30 intended to immobilize the said carriage 6 in the position for reading the card 2. The said locking system preferably includes a first hook 32, integral with the carriage 6, which locks onto a second hook 34 which is mounted so as to pivot on a pivot pin 36 arranged at the bottom of the connector 1 and which possesses, in the example shown, a finger 37 operable from the outside. It may be noted here that this action can also be carried out internally by means of an electromagnet.

The card 2 is unlocked by making the second hook 34 pivot, in this case by means of the external finger 37, this second hook 34 releasing the first hook 32 on the carriage 6. The latter is then automatically pushed back towards the outside of the connector 1 under the action of the return spring (not shown). When the carriage 6 is pushed back far enough to the outside of the connector 1, the projection 20 laterally pushes back the first end 8 of the lever 5 again, thus causing the said lever 5 to pivot about the pin 7.

The end 8, by being moved laterally, allows the card 2 to leave the connector 1.

## Claims

1. Lockable connector (1) for a smart-card (2), which includes a movable carriage (6) intended to bring the smart-card (2) from a first position, in which the said card (2) projects to the outside of the connector (1), into a second position, in which the said card (2) is immobilized inside the said connector (1) in order to be read, **characterized in that** the said connector (1) includes a lever (5) which is mounted so as to pivot about a pin (7) and has a first end (8) extending near the inlet (10) of the connector (1) and a second end (12) extending towards the inside of the connector (1), and **in that** the said carriage (6) includes at least one arm (14) which, on the one hand, laterally pushes back the said first end (8) of the pivoting lever (5) in order to allow the smart-card (2) to be inserted into the connector (1) when the carriage is in the first position and, on the other hand, laterally pushes back the second end (12) of the pivoting lever (5) when the carriage (6) is in the second position in such a way that the first end (8) of the lever (5) at least partially closes off the inlet (10) of the said connector (1).

2. Connector according to Claim 1, **characterized in that** the arm (14) of the carriage (6) has at least one projection (20) which exerts a thrust on the first end (8) (or alternatively the second end (12)) of the lever (5) when the carriage (6) is in the first position (or alternatively in the second position).

3. Connector (1) according to Claim 1, **characterized in that** each of the ends (8, 12) of the lever (5) has at least one inclined plane (22) which interacts with the projection (20) of the arm (14) of the carriage (6) in order to make the said lever (5) pivot about the pin (7).

4. Connector (1) according to one of Claims 1 to 3, **characterized in that** it furthermore includes a locking system (30) intended to immobilize the said carriage (6) in the said read position.

5. Connector according to Claim 4, **characterized in that** the said locking system (30) includes a first hook (32), integral with the carriage (6), which locks onto a second hook (34) mounted so as to pivot on a pivot pin (36) arranged at the bottom of the connector (1) when the smart-card (2) comes into the read position.

6. Connector according to Claim 5, **characterized in that** the card (2) is unlocked by making the second hook (34) pivot, releasing the first hook (32) on the carriage (6) which is then automatically pushed back towards the outside of the connector (1) under the action of a return spring.

## Patentansprüche

1. Verriegelbarer Verbinder (1) für eine Chipkarte (2), mit einem beweglichen Wagen (6), der die Chipkarte (2) aus einer ersten Stellung, in der die Karte (2) aus dem Verbinder (1) nach außen vorsteht, in eine zweite Stellung bringen soll, in der die Karte (2) innerhalb des Verbinders (1) blockiert wird, um gelesen zu werden, **dadurch gekennzeichnet, daß** der Verbinder (1) einen um einen Bolzen (7) schwenkbaren Hebel (5) aufweist, dessen erstes Ende (8) sich in der Nähe des Eingangs (10) des Verbinders (1) erstreckt und dessen zweites Ende (12) sich ins Innere des Verbinders (1) erstreckt, und daß der Wagen (6) mindestens einen Arm (14) aufweist, der einerseits das erste Ende (8) des schwenkbaren Hebels (5) seitlich zurückschiebt, um es der Chipkarte (2) zu ermöglichen, in den Verbinder (1) eingeführt zu werden, wenn der Wagen sich in der ersten Stellung befindet, und andererseits das zweite Ende (12) des schwenkbaren Hebels (5) seitlich zurückschiebt, wenn der Wagen (6) sich in der zweiten Stellung befindet, derart, daß das erste Ende (8) des Hebels (5) den Eingang des Verbinders (1) zumindest teilweise verschließt.

2. Verbinder nach Anspruch 1, **dadurch gekennzeichnet, daß** der Arm (14) des Wagens (6) mindestens einen Vorsprung (20) aufweist, der einen Schub auf das erste Ende (8) (oder alternativ das zweite Ende (12)) des Hebels (5) ausübt, wenn der Wagen (6) sich in der ersten Stellung (oder alternativ in der zweiten Stellung) befindet.

3. Verbinder (1) nach Anspruch 1, **dadurch gekennzeichnet, daß** jedes der Enden (8, 12) des Hebels (5) mindestens eine schräge Ebene (22) aufweist, die mit dem Vorsprung (20) des Arms (14) des Wagens (6) zusammenwirkt, um den Hebel (5) um den Bolzen (7) schwenken zu lassen.

4. Verbinder (1) nach einem der Ansprüche 1 bis 3, **dadurch gekennzeichnet, daß** er weiter ein Verriegelungssystem (30) aufweist, das den Wagen (6) in der Lesestellung blockiert.

5. Verbinder nach Anspruch 4, **dadurch gekennzeichnet, daß** das Verriegelungssystem (30) einen ersten Haken (32) aufweist, der fest mit dem Wagen (6) verbunden ist und sich in einen zweiten Haken (34) einhakt, der so angeordnet ist, daß er um einen am Boden des Verbinders (1) angeordneten Schwenkbolzen (36) schwenkt, wenn die Chipkarte (2) in die Lesestellung kommt.

6. Verbinder nach Anspruch 5, **dadurch gekennzeichnet, daß** die Karte (2) entriegelt wird, indem der zweite Haken (34) geschwenkt wird, wodurch der erste Haken (32) auf dem Wagen (6) freigegeben wird, der dann unter der Einwirkung einer Rückholfeder automatisch zur Außenseite des Verbinders (1) zurückgedrückt wird.

## Revendications

1. Connecteur (1) à verrouillage pour carte à puce (2), comportant un chariot mobile (6) destiné à amener la carte à puce (2) d'une première position, dans laquelle ladite carte (2) fait saillie à l'extérieur du connecteur (1), vers une deuxième position, dans laquelle ladite carte (2) est immobilisée à l'intérieur dudit connecteur (1) en vue de sa lecture, **caractérisé en ce que** ledit connecteur (1) comporte un levier (5) monté pivotant autour d'un axe (7) et ayant une première extrémité (8) s'étendant à proximité de l'entrée (10) du connecteur (1), et une deuxième extrémité (12) s'étendant vers l'intérieur du connecteur (1), et **en ce que** ledit chariot (6) comporte au moins un bras (14) qui, d'une part, repousse latéralement ladite première extrémité (8) du levier pivotant (5) pour permettre l'introduction de la carte (2) à puce dans le connecteur (1) lorsque le chariot est dans la première position, et d'autre part, repousse latéralement la deuxième extrémité (12) du levier pivotant (5) lorsque le chariot (6) est dans la deuxième position, de telle sorte que la première extrémité (8) du levier (5) vienne obturer au moins partiellement l'entrée (10) dudit connecteur (1).

2. Connecteur selon la revendication 1, **caractérisé en ce que** le bras (14) du chariot (6) comporte au moins un bossage (20) qui exerce une poussée sur la première extrémité (8) (respectivement sur la deuxième extrémité (12)) du levier (5) lorsque le chariot (6) est dans la première position (respectivement dans la deuxième position).

3. Connecteur (1) selon la revendication 1, **caractérisé en ce que** chacune des extrémités (8, 12) du levier (5) comporte au moins un plan incliné (22) coopérant avec le bossage (20) du bras (14) du chariot (6) pour faire pivoter ledit levier (5) autour de l'axe (7).

4. Connecteur (1) selon l'une des revendications 1 à 3, **caractérisé en ce qu'**il comporte en outre un système de verrouillage (30) destiné à immobiliser ledit chariot (6) dans ladite position de lecture.

5. Connecteur selon la revendication 4, **caractérisé en ce que** ledit système de verrouillage (30) comporte un premier crochet (32) solidaire du chariot (6) qui vient se verrouiller sur un deuxième crochet (34) monté pivotant sur un pivot (36) agencé au fond du connecteur (1) lorsque la carte à puce (2) arrive dans la position de lecture.

6. Connecteur selon la revendication 5, **caractérisé en ce que** le déverrouillage de la carte (2) est réalisé en faisant pivoter le deuxième crochet (34) qui libère le premier crochet (32) sur le chariot (6) qui est alors repoussé automatiquement vers l'extérieur du connecteur (1) sous l'action d'un ressort de rappel.
